# EUROPEAN PATENT SPECIFICATION

(11) **EP 4 184 644 B1**
(45) Date of publication and mention of the grant of the patent: **01.04.2026**
(21) Application number: 21858651.9
(22) Date of filing: 20.08.2021
(51) Int. Cl.: H01M 10/0565, H01M 10/42, H01M 10/052

(54) **SOLID ELECTROLYTE MEMBRANE AND SOLID-STATE BATTERY COMPRISING THE SAME**
FESTELEKTROLYTMEMBRAN UND FESTSTOFFBATTERIE DAMIT
MEMBRANE ÉLECTROLYTIQUE SOLIDE ET BATTERIE À PHASE SOLID COMPRENANT CELLE-CI

(30) Priority: 20.08.2020 KR 20200104846
(43) Date of publication of application: 24.05.2023
(73) Proprietor: LG Energy Solution, Ltd., Seoul 07335 (KR)
(72) Inventor: JIN, Guilong, Daejeon 34122 (KR); KANG, Sung-Joong, Daejeon 34122 (KR); KIM, Eun-Bee, Daejeon 34122 (KR); KIM, Ji-Young, Daejeon 34122 (KR)
(74) Representative: Goddar, Heinz J.
(86) International application number: PCT/KR2021/011145
(87) International publication number: WO 2022/039564

(56) References cited:
- CN-A- 108 878 970
- KR-A- 20160 083 485
- KR-A- 20160 133 309
- KR-A- 20200 041 165
- KR-B1- 101 169 752
- US-A1- 2016 064 773
- US-A1- 2016 254 567

## Description

### TECHNICAL FIELD

The present application claims priority to Korean Patent Application No. 10-2020-0104846 filed on August 20, 2020 in the Republic of Korea. The present disclosure relates to a solid electrolyte membrane for a solid-state battery and a solid-state battery including the same.

### BACKGROUND ART

A lithium-ion battery using a liquid electrolyte has a structure in which a negative electrode and a positive electrode are defined by a separator, and thus may cause a short-circuit when the separator is damaged by deformation or external impact, resulting in a risk, such as overheating or explosion. Therefore, it can be said that development of a solid electrolyte capable of ensuring safety is a very important problem in the field of lithium-ion secondary batteries.

A lithium secondary battery using a solid electrolyte is advantageous in that it has enhanced safety, prevents leakage of an electrolyte to improve the reliability of a battery, and facilitates manufacture of a thin battery. In addition, lithium metal may be used as a negative electrode to improve energy density. Thus, such a lithium secondary battery using a solid electrolyte has been expected to be applied to a high-capacity secondary battery for electric vehicles in addition to a compact secondary battery, and has been spotlighted as a next-generation battery.

However, in the case of a lithium secondary battery including a polymeric electrolyte, a solid electrolyte shows lower ion conductivity as compared to a liquid electrolyte. In addition, a solid electrolyte shows lower surface adhesion to an active material, as compared to a liquid electrolyte, and thus causes an increase in interfacial resistance. In addition, the electrode active material is distributed in the solid electrolyte, while they are not in contact with each other, resulting in the problem of degradation of output or capacity characteristics. Therefore, various attempts have been made to improve ion conductivity or resistance characteristics. One of such attempts includes adding a phase transformation material to improve ion conductivity, in the case of a solid electrolyte membrane using a polymeric solid electrolyte material. However, there is a problem in that as the amount of a phase transformation material is increased, mechanical strength of the solid electrolyte membrane is reduced. There is another problem in that such a phase transformation material shows low thermal and electrochemical stability. Meanwhile, there has been an attempt to use fillers, such as inorganic particles, in order to solve the problem of degradation of mechanical strength. However, introduction of inorganic particles may cause a decrease in content of a solid electrolyte material and interruption of ion conduction paths, resulting in degradation of ion conductivity. Under these circumstances, there is a need for developing a novel solid electrolyte membrane. US2016254567 A1 teaches an electrolyte structure comprising a porous metal organic framework filled with an electrolyte solution comprising a lithium electrolyte salt dissolved in a solvent mixture comprising ethylene carbonate.

### DISCLOSURE

### Technical Problem

The present disclosure is designed to solve the problems of the related art, and therefore the present disclosure is directed to providing a solid electrolyte membrane having improved ion conductivity and mechanical strength, and a solid-state battery including the same. It will be easily understood that the objects and advantages of the present disclosure may be realized by the means shown in the appended claims and combinations thereof.

### Technical Solution

In one aspect of the present disclosure, there is provided a solid electrolyte membrane for a solid-state battery which includes composite particles and a polymeric solid electrolyte material, wherein the composite particles include porous particles having a plurality of pores and a phase transformation material, the phase transformation material is a material which exists in a solid state at room temperature or lower and undergoes a phase change into a liquid state depending on an increase in temperature, and the pores are totally or at least partially filled with the phase transformation material.

According to an embodiment of the present disclosure, there is provided the solid electrolyte membrane for a solid-state battery as defined in the first embodiment, wherein the porous particles have a pore diameter of 2-50 nm.

According to an embodiment of the present disclosure, there is provided the solid electrolyte membrane for a solid-state battery as defined in the first or the second embodiment, wherein the porous particles have a diameter of 0.5-5 µm.

The porous particles include a metal organic framework, which includes at least one selected from MIL-53, MIL-100, MIL-101, MOF-74, Cu-BTC and MIL-127.

The phase transformation material includes at least one selected from ethylene carbonate, polyethylene glycol having a weight average molecular weight of 1,000 or more, succinonitrile and cyclic phosphate.

According to an embodiment of the present disclosure, there is provided the solid electrolyte membrane for a solid-state battery as defined in any one of the first to the fourth embodiments, wherein the polymeric solid electrolyte material is prepared by adding a polymer resin to a solvated lithium salt.

According to an embodiment of the present disclosure, there is provided a solid-state battery including a negative electrode, a positive electrode and a solid electrolyte membrane, wherein the solid electrolyte membrane is the same as defined in any one of the first to the sixth embodiments.

According to an embodiment of the present disclosure, there is provided a method for manufacturing a solid electrolyte membrane, wherein the solid electrolyte membrane is the same as defined in the first embodiment, the method including a step of filling the pores of the porous particles with a phase transition material by using a melt diffusion process to provide the composite particles.

According to an embodiment of the present disclosure, there is provided the method for manufacturing a solid electrolyte membrane as defined in the eighth embodiment, wherein the step of providing the composite particles includes:
(S1) introducing a phase transformation material and porous particles to a reaction chamber and sealing the reaction chamber;
(S2) controlling the sealed reaction chamber to a pressure lower than the ambient pressure and increasing the internal temperature of the reaction chamber to a temperature equal to or higher than the melting point of the phase transformation material; and
(S3) reducing the temperature of the sealed reaction chamber to solidify the phase transformation material.

According to an embodiment of the present disclosure, there is provided the method for manufacturing a solid electrolyte membrane as defined in the ninth embodiment, which further includes a step of maintaining the reaction chamber under vacuum before carrying out step (S3) and after carrying out step (S2).

### Advantageous Effects

The solid electrolyte membrane according to the present disclosure uses composite particles having pores filled with a phase transformation material as fillers of the solid electrolyte membrane, and thus provides a solid electrolyte membrane having high ion conductivity and mechanical strength, while minimizing the amount of the phase transformation material.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a schematic view illustrating the ion conduction path in the solid electrolyte membrane according to an embodiment of the present disclosure.
FIG. 2 is schematic view illustrating the ion conduction path in the solid electrolyte membrane according to Comparative Example 1.

### BEST MODE

Hereinafter, preferred embodiments of the present disclosure will be described in detail with reference to the accompanying drawings.

The present disclosure relates to a solid electrolyte membrane. The solid electrolyte membrane is interposed between a positive electrode and a negative electrode of an electrochemical device and functions as an ion conductor, while functioning to insulate the positive electrode and the negative electrode from each other. According to the present disclosure, the electrochemical device may be a solid-state battery using a solid electrolyte material, such as oxide, sulfide or polymer resin, as an electrolyte material. Particular examples of the solid-state battery include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer secondary batteries, may be exemplified.

According to the present disclosure, the solid electrolyte membrane includes a solid electrolyte material and composite particles, wherein a mixture of the solid electrolyte material with the composite particles may be formed into a sheet-like shape having a predetermined thickness. According to an embodiment of the present disclosure, the solid electrolyte membrane may have a thickness of 1-100 µm. However, the thickness of the solid electrolyte membrane is not limited to the above-mentioned range, and may be controlled to a suitable range depending on the characteristics of the battery to which the corresponding separator is applied. The composite particles are dispersed in the solid electrolyte membrane and include porous particles and a phase transformation material, wherein the pores of the porous particles are totally or at least partially filled with the phase transformation material.

Since the solid polymeric electrolyte according to the present disclosure functions to conduct lithium ions in the electrode, any solid polymeric electrolyte may be used without limitation to any particular type, as long as it ensures that the corresponding solid electrolyte membrane shows a degree of ion conductivity sufficient to drive an applicable battery. According to an embodiment of the present disclosure, the solid polymeric electrolyte may be any material having a high ion conductivity, such as an ion conductivity of 10⁻⁴ s/cm or more.

According to the present invention, the solid electrolyte material is a polymeric solid electrolyte material. According to an embodiment of the present disclosure, the polymeric solid electrolyte may include a lithium salt and polymer resin. According to an embodiment of the present disclosure, the polymeric solid electrolyte may include a polymeric solid electrolyte formed by adding a polymer resin to a solvated lithium salt, a polymer gel electrolyte formed by impregnating a polymer resin with an organic electrolyte containing an organic solvent and lithium salt, ionic liquid, monomer or oligomer, or the like. According to an embodiment of the present disclosure, the polymeric solid electrolyte may include, as a polymer resin, a polyether polymer, polycarbonate polymer, acrylate polymer, polysiloxane polymer, phosphazene polymer, polyethylene derivative, polyalkylene oxide derivative, such as polyethylene oxide (PEO) or polypropylene oxide, phosphate polymer, polyagitation lysine, polyester sulfide, polyvinyl alcohol, polyvinylidene fluoride, polymer containing an ionically dissociable group, or the like. In addition, the polymeric solid electrolyte may include, as a polymer resin, a branched copolymer including polyethylene oxide (PEO) backbone copolymerized with a comonomer including an amorphous polymer, such as PMMA, polycarbonate, polydimethylsiloxane (PDMS) and/or phosphazene, comb-like polymer, crosslinked polymer resin, or the like, or a mixture of such polymers.

In addition, the polymer gel electrolyte includes a lithium salt-containing organic electrolyte and a polymer resin, wherein the organic electrolyte is used in an amount of 60-400 parts by weight based on the weight of the polymer resin. The polymer applied to the gel electrolyte is not limited to any particular ingredient. For example, the polymer may include a polyether polymer, PVC polymer, PMMA polymer, polyacrylonitrile (PAN) polymer, polyvivinylidene fluoride (PVDF) polymer, polyvinylidene fluoride-co-hexafluoropropylene (PVDF-HFP), or the like, or a mixture of such polymers.

According to an embodiment of the present disclosure, the lithium salt may be represented by Li⁺X⁻. According to an embodiment of the present disclosure, the lithium salt includes Li⁺ as a cation, and may include at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, F₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (F₂SO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻ and (CF₃CF₂SO₂)₂N⁻.

According to an embodiment of the present disclosure, when the electrolyte layer includes a polymer resin and lithium salt, the polymer resin and lithium salt may be present at a molar ratio of 1:5-1:30. For example, when the polymer resin is polyethylene oxide, the molar ratio of [EO]:[Li⁺] may be 5:1-30:1.

Meanwhile, according to an embodiment of the present disclosure, the solid electrolyte membrane may optionally further include an oxide-based solid electrolyte material and/or a sulfide-based solid electrolyte material as a solid electrolyte material, besides the above-mentioned polymeric electrolyte material. The oxide-based solid electrolyte contains oxygen (O) and has conductivity of metal ions that belong to Group1 or Group 2 in the Periodic Table. Non-limiting examples of the oxide-based solid electrolyte include at least one selected from LLTO compounds, Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP compounds, LATP compounds, Li₁₊ₓTi₂₋ₓAlₓSi_{y}(PO₄)_{3-y} (wherein 0 ≤ x ≤ 1, 0 ≤ y ≤ 1), LiAlₓZr₂₋ₓ(PO₄)₃ (wherein 0 ≤ x ≤ 1, 0 ≤ y ≤ 1), LiTiₓZr₂₋ₓ(PO₄)₃ (wherein 0 ≤ x ≤ 1, 0 ≤ y ≤ 1), LISICON compounds, LIPON compounds, perovskite compounds, NASICON compounds and LLZO compounds. However, the scope of the present disclosure is not limited thereto.

The sulfide-based solid electrolyte contains sulfur (S), has conductivity of metal ions that belong to Group1 or Group 2 in the Periodic Table, and may include Li-P-S glass or Li-P-S glass ceramic. Non-limiting examples of the sulfide-based solid electrolyte include at least one of Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, or the like. However, the scope of the present disclosure is not limited thereto.

The composite particles include porous particles having a plurality of pores in the bodies thereof, and a phase transformation material with which the pores of the particles are filled.

The porous particles have one or more pores in the bodies thereof. According to an embodiment of the present disclosure, the pore preferably has such a structure that it may be filled with a phase transformation material introduced from the outside. The pores preferably include open pores penetrating through the particles and/or semi-open pores the opening of which are open merely in one direction. According to the present disclosure, the porous particles preferably include open pores penetrating through the particles from one side end to the other side end and/or semi-open pores that are open merely in one direction so that gases or fluids may be introduced thereto from the outside. According to an embodiment of the present disclosure, the pores may have a diameter of 2-50 nm. According to an embodiment of the present disclosure, the porous particles may have an adequate porosity range within a range of 10-90 vol%, but are not limited to any specific range. The porosity means the volume of pores occupied by the pores based on the total volume.

According to an embodiment of the present disclosure, the porous particles have pores formed in the bodies thereof, and are not particularly limited, as long as they are stable and are not oxidized or reduced by electrochemical reactions, such as charge/discharge of a battery.

The metal-organic framework is generally referred to as 'porous coordination polymer' or 'porous organic/inorganic hybrid'. The metal-organic framework starts to be developed newly by the graft of molecular coordination bonding with material science. The metal-organic framework has a high surface area and molecular-scaled or nano-scaled micropores, and may be used not only for an adsorbent, a gas storage material, a sensor, a membrane, a functional thin film, a drug delivery material, a catalyst, a catalyst carrier, or the like, but also for collecting guest molecules smaller than the micropore size or for classifying molecules depending on size by using the micropores, and thus has been studied intensively more recently.

The metal-organic framework is a porous crystalline organic/inorganic polymer compound formed by bonding of a central metal ion with an organic ligand. The metal-organic framework includes both an organic material and an inorganic material in its crystalline framework structure. For example, since both a polar metal ion and a carboxylic acid oxygen anion are contained in the metal-organic framework, and a nonpolar aromatic compound group coexists therewith, the metal-organic framework may have hydrophilicity and hydrophobicity at the same time. The metal-organic framework includes MIL-53, MIL-100, MIL-101, MOF-74, Cu-BTC, or MIL-127.

According to an embodiment of the present disclosure, the pore diameter may be determined by using an adsorption gas, such as nitrogen, with BELSORP (BET system) available from BEL JAPAN Co., or through the mercury intrusion porosimetry or a method using a capillary flow porometer (available from Porous materials Co.). For example, in the case of the capillary flow porometer, a sample to be tested is filled with a liquid and an inert gas is allowed to pass therethrough, and then the pore size is calculated by measuring the gas pressure and flow for the dry sample to be tested and wet sample to be tested.

According to an embodiment of the present disclosure, the porous particles preferably have a diameter of 0.5-5 µm. The particle diameter may be determined through particle size distribution (PSD). PSD means a particle size distribution measured by sieve classification. For example, PSD may be obtained by determining a laser diffraction scattering particle size distribution.

The phase transformation material means a material which exists in a solid state at room temperature or lower, and undergoes a phase change into a liquid state depending on an increase in temperature. According to an embodiment of the present disclosure, 'room temperature' means about 18-28°C. The temperature where the phase transformation material undergoes a phase change into a liquid state may be 30°C or higher, 40°C or higher, 50°C or higher, or 70°C or higher. As used herein, 'room temperature' means 24-26°C. According to an embodiment of the present disclosure, the phase transformation material maintains its solid state at a temperature of room temperature or lower, but undergoes a phase change into a liquid state, when the internal temperature of a battery is increased during the aging step or during the operation of the battery and reaches a specific temperature condition or higher. For example, when aging is carried out at about 60°C for about 10 seconds after the assemblage of a battery, the phase transformation material may be liquefied. When the porous particles are filled with the phase transformation material as mentioned above, ion conduction paths may be formed effectively along the surfaces of the porous particles. For example, when the phase transformation material is liquefied, the liquefied phase transformation material may partially flow out from the composite particles, and may be in contact with the solid electrolyte material present in the vicinity of the composite particles. Since the phase transformation material is an ingredient used as a plasticizer for a polymer material, in general, the polymeric solid electrolyte material may be softened by such a plasticizer ingredient, when the liquefied phase transformation material is in contact with the polymeric solid electrolyte material. As a result, the free volume is increased and segmenting motion is accelerated, thereby providing improved ion conductivity. Meanwhile, the phase transformation material has poor electrochemical properties, since it is evaporated with ease or causes deterioration of a battery device. Therefore, it is possible to improve the heat resistance and electrochemical properties of the solid electrolyte membrane of a battery by filling the porous particles with the phase transformation material so that the phase transformation material may be enclosed.

According to an embodiment of the present disclosure, when the phase transformation material is converted into a liquid state, it is not essentially required that the battery driving temperature is equal to or higher than the melting point of the phase transformation material.

According to an embodiment of the present disclosure, the phase transformation material may include ethylene carbonate, polyethylene glycol having a weight average molecular weight of 1,000 or more, succinonitrile, cyclic phosphate, or a mixture thereof. According to the present disclosure, ethylene carbonate has a melting point of about 37°C, polyethylene glycol (Mw 1,000 or more) has a melting point of about 35°C, succinonitrile has a melting point of about 57°C, and cyclic phosphate has a melting point of about 65°C.

Meanwhile, propylene carbonate (PC), polyethylene glycol having a weight average molecular weight of less than 1,000, particularly 600 or less, polyethylene glycol dimethyl ether and diethyl phthalate (DEP), or the like, is used as an organic solvent for a liquid electrolyte, but exists in a liquid state at room temperature, and thus is not used as a phase transformation material according to the present disclosure.

According to an embodiment of the present disclosure, the molecular weight is generally and frequently determined by using the end group analysis, colligative property method, light scattering method, ultracentrifugal method, viscometry or gel permeation chromatography (GPC). Particularly, the molecular weight may be calculated from a calibration curve by connecting a GPC column to an HPLC system equipped with a differential diffractometer as a detector and by using a mixed solution of aqueous NaCl solution with acetonitrile as an eluent and pullulan as a standard material.

According to an embodiment of the present disclosure, the phase transformation material may be ethylene carbonate. Ethylene carbonate has a melting point of about 37°C and exists in a solid state at room temperature. Ethylene carbonate is liquefied at a temperature equal to of higher than the melting point, and liquefied ethylene carbonate may dissolve the solid lithium salt in the vicinity thereof to function as a liquid electrolyte, and has an advantage of low incorporation of impurities. Particularly, such ethylene carbonate shows high ion conductivity and oxidization reactivity (6.2 V) in a non-aqueous electrolyte, and thus assists improvement of the battery performance, after forming a solid electrolyte interface (SEI) film.

According to an embodiment of the present disclosure, the composite particles may be obtained by filling the pores of the porous particles with the phase transformation material through a melt diffusion process.

According to an embodiment of the present disclosure, the composite particles may be obtained through the melt diffusion process as follows. A reaction chamber is prepared, and porous particles and a phase transformation material are introduced thereto. The ratio of the amount of the porous particles to that of the phase transformation material is not particularly limited, but the amount of the phase transformation material may be controlled suitably, considering the pore volume of the porous particles. Preferably, the amount (volume) of the phase transformation material may exceed the pore volume of the porous particles. Next, the chamber is sealed, and the pressure is controlled in such a manner that the pressure is lower than the ambient pressure, and preferably becomes vacuum. In addition, the internal temperature of the chamber is increased preferably to a temperature equal to or higher than the melting point of the phase transformation material so that the phase transformation material may be molten. When the phase transformation material is molten, it is allowed to stand under vacuum for an adequate time, and then the temperature is reduced so that the phase transformation material may be solidified again. In this manner, it is possible to introduce and fill the phase transformation material into the pores of the porous particles.

Meanwhile, the solid electrolyte membrane according to the present disclosure is not limited to any specific preparation method, as long as it may include the composite particles and may be formed into a sheet-like thin film. According to an embodiment of the present disclosure, the solid electrolyte membrane may be obtained by the following method. First, a solid electrolyte material is introduced to a suitable solvent and dissolved or dispersed therein, and the composite particles are introduced thereto to prepare slurry for forming a solid electrolyte membrane. The slurry is applied on a release sheet, such as polyethylene terephthalate, to a predetermined thickness, and then dried. Then, the release sheet is removed to obtain a solid electrolyte membrane.

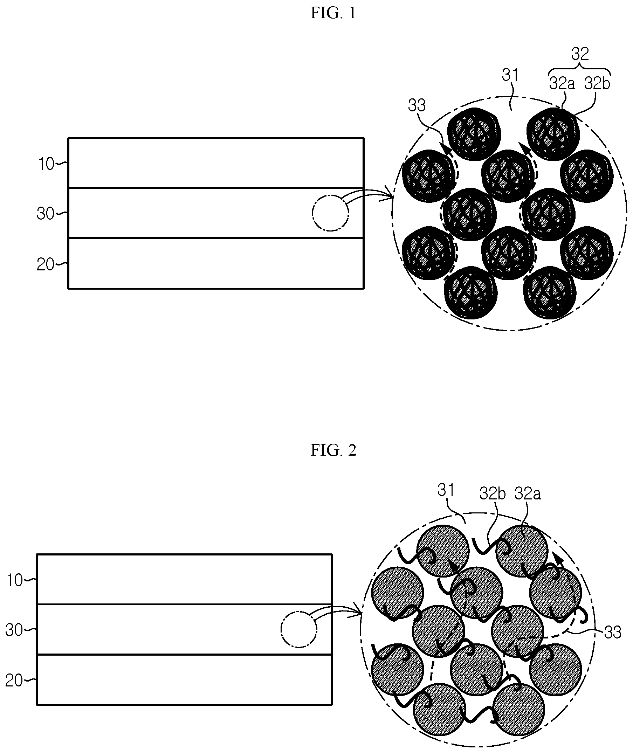

FIG. 1 is a schematic sectional view illustrating the composite particles, a solid electrolyte membrane including the composite particles and an electrode assembly including the same according to an embodiment of the present disclosure. In the electrode assembly, the solid electrolyte membrane 30 may be interposed between a negative electrode 10 and a positive electrode 20. Referring to FIG. 1, the solid electrolyte membrane 30 according to the present disclosure includes composite particles 32 distributed randomly in a polymeric solid electrolyte material 31, wherein the composite particles include porous particles 32a filled with a phase transformation material 32b. As a battery is charged and discharged, the internal temperature of the battery is increased, and the phase transformation material in the composite particles is liquefied to affect improvement of the ion conductivity of the solid electrolyte membrane. FIG. 1 schematically shows this mechanism. As shown in FIG. 1, the composite particles filled with the phase transformation material 32b are distributed in the solid electrolyte membrane. Therefore, the phase transformation material is liquefied and flows out from the surfaces of the composite particles, and the solid electrolyte material present in the vicinity of the composite particles is softened to form an ion conduction path along the surfaces of the composite particles, resulting in improvement of the conductivity. The arrow mark represented by the dotted line in FIG. 1 shows the ion conduction path. FIG. 2 illustrates that the porous particles 32a are not filled with the phase transformation material 32b, but the phase transformation material 32b is simply mixed with the polymeric solid electrolyte material 31 in the solid electrolyte membrane 30. In this case, even when the solid electrolyte membrane is softened by the phase transformation material, it is difficult to form an ion conduction path 33 continuously, thereby providing a lower effect of improving ion conductivity, as compared to the present disclosure.

In another aspect of the present disclosure, there is provided a solid-state battery including the solid electrolyte membrane according to the present disclosure. The solid-state battery includes a positive electrode, a negative electrode and the solid electrolyte membrane interposed between the positive electrode and the negative electrode.

According to the present disclosure, the positive electrode includes a positive electrode current collector, and a positive electrode active material layer disposed on at least one surface of the current collector and containing a positive electrode active material, a conductive material and a solid electrolyte. The positive electrode active material may further include a binder resin, if necessary. The positive electrode active material may include any one selected from: layered compounds, such as lithium manganese composite oxide (LiMn₂O₄, LiMnO₂, etc.), lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNiₓCo_{y}Mn_{z}O₂ (wherein x + y + z = 1, 0 < x < 1, 0 < y < 1, 0 < z < 1), or LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); LiMn₂O₄ in which Li is partially substituted with an alkaline earth metal ion; disulfide compounds; Fe₂(MoO₄)₃; or the like, or a mixture of two or more of them.

According to the present disclosure, the negative electrode includes a negative electrode current collector, and a negative electrode active material layer disposed on at least one surface of the current collector and containing a negative electrode active material, a conductive material and a solid electrolyte. The negative electrode active material may further include a binder resin, if necessary. The negative electrode active material may include any one selected from: lithium metal oxide; carbon such as non-graphitizable carbon, graphitic carbon, or the like; metal composite oxides such as LiₓFe₂O₃ (0 ≤ x ≤ 1), LiₓWO₂ (0 ≤ x ≤ 1), SnₓMe₁₋ₓMe'_{y}O_{z} (Me is Mn, Fe, Pb or Ge; Me' is Al, B, P, Si, an element of Group 1, Group 2 or Group 3 in the Periodic Table, or halogen; 0 < x ≤ 1; 1 ≤ y ≤ 3; 1 ≤ z ≤ 8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, or the like; conductive polymers such as polyacetylene; Li-Co-Ni based materials; titanium oxide; or the like, or a mixture of two or more of them.

According to an embodiment of the present disclosure, the conductive material may include any one selected from the group consisting of graphite, carbon black, carbon fibers or metal fibers, metal powder, conductive whisker, conductive metal oxide, activated carbon and polyphenylene derivatives, or a mixture of two or more such conductive materials. Particularly, the conductive material may include any one selected from the group consisting of: natural graphite, artificial graphite, Super-p, acetylene black, Ketjen black, channel black, furnace black, lamp black, thermal black, Denka black, aluminum powder, nickel powder, zinc oxide, potassium titanate and titanium oxide; or a mixture of two or more of such conductive materials.

The current collector is not particularly limited, as long as is causes no chemical change in the corresponding battery and has high conductivity. Particular examples of the current collector include stainless steel, aluminum, nickel, titanium, baked carbon, or aluminum or stainless steel surface-treated with carbon, nickel, titanium, silver, or the like.

The binder resin may be a polymer used conventionally in an electrode in the art. Non-limiting examples of the binder resin include: polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyviny1 pyrro1lidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethy1polyvinyla1cho1, cyanoethyl cellulose, cyanoethyl sucrose, pullulan, carboxymethyl cellulose, or a mixture of two or more of them. However, the scope of the present disclosure is not limited thereto.

The solid electrolyte contained in the positive electrode or the negative electrode may include at least one selected from a polymeric solid electrolyte, an oxide-based solid electrolyte and a sulfide-based solid electrolyte, and reference will be made to the above description about the solid electrolyte membrane.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

First, MIL-53 (metal-organic framework) (Sigma-Aldrich) was filled with succinonitrile (SN) as a phase transformation material by using the melt diffusion process. SN and MIL-53 (particle diameter 1-3 µm, pore diameter about 4 nm) were introduced to a vacuum chamber at a volume ratio of 1:1, and heated to 100°C or higher. Next, the materials were allowed to stand under vacuum at 100°C for 12 hours, and then the temperature was reduced gradually to room temperature. In this manner, composite particles having micropores filled with SN were obtained. Then, polyethylene oxide (PEO) and LiTFSI were dissolved in acetonitrile at a molar ratio of [EO]:[Li⁺] = 8/1, and the composite particles was mixed therewith at the same time at a volume ratio of 6:4 (PEO:composite particles) to prepare slurry. The slurry was applied thinly onto a release film (PET film) through a doctor blade coating process and dried naturally at room temperature. After that, the release film was removed to obtain a solid electrolyte membrane. All of the processes for manufacturing the solid electrolyte membrane were carried out in a dry room.

### Example 2

A solid electrolyte membrane was obtained in the same manner as Example 1, except that ethylene carbonate was used instead of succinonitrile (SN) as a phase transformation material, and the chamber temperature was increased to 60°C and the same temperature was maintained.

### Comparative Example 1

A solid electrolyte membrane was obtained in the same manner as Example 1, except that non-filled MIL-53 was used.

### Comparative Example 2

First, a porous sheet (porosity 50 vol%) was impregnated with succinotrile (SN) by using the same melt diffusion process as described in Example 1. In this manner, a membrane structure having micropores filled with SN was obtained. In the membrane structure, the porous sheet and SN were present at a volume ratio of 1:1. Then, polyethylene oxide (PEO) and LiTFSI were dissolved in acetonitrile at a molar ratio of [EO]:[Li⁺] = 8/1 to prepare slurry. The slurry was applied thinly onto a release film (PET film) through a doctor blade coating process and dried naturally at room temperature. After that, the release film was removed to obtain a solid electrolyte film. Then, the SN-filled sheet structure was laminated with the electrolyte film to obtain an electrolyte membrane. All of the processes for manufacturing the sheet structure and the solid electrolyte film were carried out in a dry room.

### Determination of Ion Conductivity

The ion conductivity of the solid electrolyte membrane according to each of Examples and Comparative Examples was determined by using a coin cell. The ion conductivity was determined by using the electrochemical impedance spectroscopy (EIS) method at room temperature. The EIS was carried out under the conditions of 10 mV and 100 kHz to 1 Hz. The results of determination of ion conductivity are shown in the following Table 1. The same amount of phase transformation material was used in Examples 1 and 2 and Comparative Example 1 and 2. As shown in Table 1, it can be seen that each of the solid electrolyte membranes of Examples 1 and 2 including the composite particles according to the present disclosure shows higher ion conductivity as compared to the solid electrolyte membranes according to Comparative Examples 1 and 2. In other words, it can be seen that when the same amount of phase transformation material is used, the electrolyte membrane having the structural characteristics according to the present disclosure ensures high ion conductivity.

**[Table 1]**

| | Example 1 | Example 2 | Comp. Ex. 1 | Comp. Ex. 2 |
|---|---|---|---|---|
| Ion conductivity (S/cm) | 5 x 10⁻⁴ | 4 x 10⁻⁴ | 1 x 10⁻⁴ | 1 x 10⁻⁴ |

**[Description of Main Elements]**

| | | | |
|---|---|---|---|
| 30: | Solid electrolyte membrane | 10: | Negative electrode |
| 20: | Positive electrode | 31: | Solid electrolyte material |
| 32: | Composite particles | 32a: | Porous particles |
| 32b: | Phase transformation material | 33: | Ion conduction path |

## Claims

1. A solid electrolyte membrane for a solid-state battery which comprises composite particles and a polymeric solid electrolyte material, wherein
the composite particles comprise porous particles having a plurality of pores and a phase transformation material, the phase transformation material is a material which exists in a solid state at room temperature or lower and undergoes a phase change into a liquid state depending on an increase in temperature, and the pores are totally or at least partially filled with the phase transformation material;
wherein the porous particles comprise a metal organic framework, which comprises at least one selected from MIL-53, MIL-100, MIL-101, MOF-74, Cu-BTC and MIL-127; and
the phase transformation material comprises at least one selected from ethylene carbonate, polyethylene glycol having a weight average molecular weight of 1,000 or more, succinonitrile and cyclic phosphate.

2. The solid electrolyte membrane for a solid-state battery according to claim 1, wherein the porous particles have a pore diameter of 2-50 nm, wherein said pore diameter is determined according to the present description.

3. The solid electrolyte membrane for a solid-state battery according to claim 1, wherein the porous particles have a diameter of 0.5-5 µm, wherein said diameter is determined according to the present description.

4. The solid electrolyte membrane for a solid-state battery according to claim 1, wherein the polymeric solid electrolyte material is prepared by adding a polymer resin to a solvated lithium salt.

5. A solid-state battery comprising a negative electrode, a positive electrode and a solid electrolyte membrane, wherein the solid electrolyte membrane is the same as defined in any one of claims 1 to 4.

6. A method for manufacturing the solid electrolyte membrane as defined in claim 1, the method comprising a step of filling the pores of the porous particles with a phase transition material by using a melt diffusion process to provide the composite particles.

7. The method for manufacturing the solid electrolyte membrane according to claim 6, wherein the step of providing the composite particles comprises:
(S1) introducing a phase transformation material and porous particles to a reaction chamber and sealing the reaction chamber;
(S2) controlling the sealed reaction chamber to a pressure lower than the ambient pressure and increasing the internal temperature of the reaction chamber to a temperature equal to or higher than the melting point of the phase transformation material; and
(S3) reducing the temperature of the sealed reaction chamber to solidify the phase transformation material.

8. The method for manufacturing the solid electrolyte membrane according to claim 7, which further comprising a step of maintaining the reaction chamber under vacuum before carrying out step (S3) and after carrying out step (S2).

9. A solid-state battery comprising a negative electrode, a positive electrode and the solid electrolyte membrane as defined in claim 2.

10. A solid-state battery comprising a negative electrode, a positive electrode and the solid electrolyte membrane as defined in claim 3.

11. A solid-state battery comprising a negative electrode, a positive electrode and the solid electrolyte membrane as defined in claim 1.

12. A solid-state battery comprising a negative electrode, a positive electrode and the solid electrolyte membrane as defined in claim 4.

## Patentansprüche

1. Festelektrolytmembran für eine Festkörperbatterie, die Verbundpartikel und ein polymeres Festelektrolytmaterial umfasst, wobei
die Verbundpartikel poröse Partikel mit einer Vielzahl von Poren und ein Phasenumwandlungsmaterial umfassen, wobei das Phasenumwandlungsmaterial ein Material ist, das bei Raumtemperatur oder niedriger in einem festen Zustand vorliegt und abhängig von einer Temperaturerhöhung eine Phasenänderung in einen flüssigen Zustand erfährt, und die Poren vollständig oder zumindest teilweise mit dem Phasenumwandlungsmaterial gefüllt sind;
wobei die porösen Partikel ein metallorganisches Gerüst umfassen, das mindestens eines ausgewählt aus MIL-53, MIL-100, MIL-101, MOF-74, Cu-BTC und MIL-127 umfasst; und
das Phasenumwandlungsmaterial mindestens eines ausgewählt aus Ethylencarbonat, Polyethylenglykol mit einem gewichtsmittleren Molekulargewicht von 1.000 oder mehr, Succinonitril und cyclischem Phosphat umfasst.

2. Festelektrolytmembran für eine Festkörperbatterie nach Anspruch 1, wobei die porösen Partikel einen Porendurchmesser von 2-50 nm aufweisen, wobei der Porendurchmesser
gemäß der vorliegenden Beschreibung bestimmt wird.

3. Festelektrolytmembran für eine Festkörperbatterie nach Anspruch 1, wobei die porösen Partikel einen Durchmesser von 0,5-5 µm aufweisen, wobei der Durchmesser
gemäß der vorliegenden Beschreibung bestimmt wird.

4. Festelektrolytmembran für eine Festkörperbatterie nach Anspruch 1, wobei das polymere Festelektrolytmaterial durch Zugeben eines Polymerharzes zu einem solvatisierten Lithiumsalz hergestellt wird.

5. Festkörperbatterie, umfassend eine negative Elektrode, eine positive Elektrode und eine Festelektrolytmembran, wobei die Festelektrolytmembran die gleiche wie in einem der Ansprüche 1 bis 4 definiert ist.

6. Verfahren zur Herstellung der Festelektrolytmembran wie in Anspruch 1 definiert, wobei das Verfahren einen Schritt des Füllens der Poren der porösen Partikel mit einem Phasenübergangsmaterial unter Verwendung eines Schmelzdiffusionsverfahrens umfasst, um die Verbundpartikel bereitzustellen.

7. Verfahren zur Herstellung der Festelektrolytmembran nach Anspruch 6, wobei der Schritt des Bereitstellens der Verbundpartikel Folgendes umfasst:
(S1) Einführen eines Phasenumwandlungsmaterials und poröser Partikel in eine Reaktionskammer und Abdichten der Reaktionskammer;
(S2) Steuern der abgedichteten Reaktionskammer auf einen Druck, der niedriger als der Umgebungsdruck ist, und Erhöhen der Innentemperatur der Reaktionskammer auf eine Temperatur, die gleich oder höher als der Schmelzpunkt des Phasenumwandlungsmaterials ist; und
(S3) Verringern der Temperatur der abgedichteten Reaktionskammer, um das Phasenumwandlungsmaterial zu verfestigen.

8. Verfahren zur Herstellung der Festelektrolytmembran nach Anspruch 7, das ferner einen Schritt des Haltens der Reaktionskammer unter Vakuum vor dem Ausführen von Schritt (S3) und nach dem Ausführen von Schritt (S2) umfasst.

9. Festkörperbatterie, umfassend eine negative Elektrode, eine positive Elektrode und die Festelektrolytmembran wie in Anspruch 2 definiert.

10. Festkörperbatterie, umfassend eine negative Elektrode, eine positive Elektrode und die Festelektrolytmembran wie in Anspruch 3 definiert.

11. Festkörperbatterie, umfassend eine negative Elektrode, eine positive Elektrode und die Festelektrolytmembran wie in Anspruch 1 definiert.

12. Festkörperbatterie, umfassend eine negative Elektrode, eine positive Elektrode und die Festelektrolytmembran wie in Anspruch 4 definiert.

## Revendications

1. Membrane d'électrolyte solide pour une batterie à semi-conducteurs, comprenant des particules composites et une matière polymère d'électrolyte solide,
les particules composites comprenant des particules poreuses dotées d'une pluralité de pores et d'un matériau à transformation de phase, le matériau à transformation de phase étant un matériau existant à l'état solide à la température ambiante, ou inférieure, et subissant un changement de phase à un état liquide en fonction d'une augmentation de la température, et les pores étant totalement, ou au moins partiellement remplies du matériau à transformation de phase ;
les particules poreuses comprenant une structure organique métallique, comprenant au moins un sélectionné parmi les suivants : MIL-53, MIL-100, MIL-101, MOF-74, Cu-BTC et MIL-127; et
le matériau à transformation de phase comprenant au moins un sélectionné parmi les suivants : carbonate d'éthylène, glycol polyéthylénique au rapport poids-poids moléculaire moyen égal à 1 000, ou davantage, succinonitrile, et phosphate cyclique.

2. Membrane d'électrolyte solide pour une batterie à semi-conducteurs selon la revendication 1, les particules poreuses ayant un diamètre de pore de 2 à 50 nm, ledit diamètre de pore étant déterminé conformément à la présente description.

3. Membrane d'électrolyte solide pour une batterie à semi-conducteurs selon la revendication 1, les particules poreuses ayant un diamètre de 0,5 à 5 µm, ledit diamètre étant déterminé conformément à la présente description.

4. Membrane d'électrolyte solide pour une batterie à semi-conducteurs selon la revendication 1, la matière polymère d'électrolyte solide étant préparée en ajoutant une résine de polymère à un sel de lithium solvaté.

5. Batterie à semi-conducteurs comprenant une électrode négative, une électrode positive, et une membrane d'électrolyte solide, la membrane d'électrolyte solide étant la même que celle qui est définie dans une quelconque des revendications 1 à 4.

6. Procédé de fabrication de la membrane d'électrolyte solide définie dans la revendication 1, le procédé comprenant une étape de remplissage des pores des particules poreuses avec une matière de transition de phase en utilisant un processus de diffusion en fusion pour obtenir les particules composites.

7. Procédé de fabrication de la membrane d'électrolyte solide selon la revendication 6, l'étape d'agencement des particules composites comprenant :
(S1) l'introduction d'une matière de transformation de phase et de particules poreuses dans une chambre de réaction, et le scellement de la chambre de réaction ;
(S2) la régulation de la chambre de réaction scellée sur une pression inférieure à la pression ambiante, et l'augmentation de la température interne de la chambre de réaction à une température égale ou supérieure au point de fusion de la matière de transformation de phase ; et
(S3) la réduction de la température de la chambre de réaction scellée pour solidifier la matière de transformation de phase.

8. Procédé de fabrication de la membrane d'électrolyte solide selon la revendication 7, comprenant en outre l'étape de maintien de la chambre de réaction sous vide avant l'exécution de l'étape (S3) et après l'exécution de l'étape (S2).

9. Batterie à semi-conducteurs comprenant une électrode négative, une électrode positive, et la membrane d'électrolyte solide selon la définition à la revendication 2.

10. Batterie à semi-conducteurs comprenant une électrode négative, une électrode positive, et la membrane d'électrolyte solide selon la définition à la revendication 3.

11. Batterie à semi-conducteurs comprenant une électrode négative, une électrode positive, et la membrane d'électrolyte solide selon la définition à la revendication 1.

12. Batterie à semi-conducteurs comprenant une électrode négative, une électrode positive, et la membrane d'électrolyte solide selon la définition à la revendication 4.
